# EUROPEAN PATENT APPLICATION

(11) **EP 4 517 408 A1**
(43) Date of publication of application: **05.03.2025**
(21) Application number: 23386083.2
(22) Date of filing: 04.09.2023
(51) Int. Cl.: G02B 27/01, G02C 7/04, G02C 11/00

(54) **METHOD FOR POWERING AUGMENTED REALITY CONTACT LENSES**

(71) Applicant: Sony Interactive Entertainment Europe Limited, London W1F 7LP (GB)
(72) Inventor: Michailidis, Lazaros, London, W1F 7LP (GB); Hume, Oliver, London, W1F 7LP (GB)
(74) Representative: Gill Jennings & Every LLP

(57) **Abstract**

A method for powering a contact lens and a contact lens (100) configured to provide an augmented reality experience, comprising: a first transparent body (102) configured to be positioned on an eyeball; an augmented reality display (104); and one or more energy generating components, configured to power the augmented reality display (104), comprising one or more piezoelectric components (106) and one or more photovoltaic cells (108).

## Description

### FIELD OF THE INVENTION

The present disclosure relates to contact lenses configured to provide an augmented reality experience and a method for powering said contact lens.

### BACKGROUND

The virtual reality (VR) and augmented reality (AR) industry is growing fast, particularly the use of VR and AR displays and systems in gaming systems. Virtual reality systems and displays typically display digital graphics or information, but do not allow the user to see the real world while viewing such graphics. Such VR displays normally comprise a display positioned close to the user's eyes, so that the display takes up their whole field of view. However, if a VR system further comprises a front-facing camera, a pseudo-augmented reality can be created by enabling a user to observe the real world (as seen by the front-facing camera) with digital graphics or information overlaid on the real-world view. Conventional augmented reality systems and displays enable a user to observe the real world with digital graphics or information overlaid on the real-world view. Such AR displays normally comprise a transparent screen, onto which digital graphics or information is projected and superimposed over the real-world view.

A growing trend in this industry is working out how to seamlessly integrate this technology into everyday life, without the need for bulky and intrusive headsets and displays. To this end, contact lenses with capabilities of projecting visual content that the user perceives as augmented content, are seen as the ultimate solution to convenient, minimally intrusive, and compact AR systems. Furthermore, there are claims that augmented reality lenses can boost human performance in real-world tasks, as set out in Rosenberg, L.B. (2022). Augmented Reality: Reflections at Thirty Years. In: Arai, K. (eds) Proceedings of the Future Technologies Conference (FTC) 2021, Volume 1. FTC 2021. Lecture Notes in Networks and Systems, vol 358. Springer, Cham.

This presupposes integration of such technology in our everyday interactions with the world and others. However, contact lenses containing such technology pose difficult engineering challenges due to the miniaturization of standard AR system components. Particularly, continuous, real-time utilization of such technology raises the reasonable concern that a full "charge" of such a device might be insufficient for the integrative intent of augmented reality lenses. The biggest engineering challenge, as with all wearable technology, being how to power the device in a manner that does not interfere with its continuous use or the ability for it to be convenient, minimally intrusive and compact. As a result, there is a need to solve the problems of the prior art to provide a device with extended operability and a method for providing such a device.

The use of batteries contained on the contact lenses is limited by the size of batteries which may be positioned on a contact lens. Specifically, due to the small area available for these batteries without them becoming intrusive, the period of use of the contact lens will be severely limited by the capacity of the batteries. Thereby interfering with continuous use of the contact lens and the ability for the contact lenses to be convenient, minimally intrusive and compact.

Electric energy could be supplied and received by the contact lenses wirelessly. For example, by an electromagnetic induction method, a radio wave method, or an electromagnetic field resonance method. However, this means that the contact lenses would require an external power source, which would result in them being less compact and more intrusive. Furthermore, such an external power source would necessarily be positioned close enough to the contact lenses for wireless charging, resulting in them being further inconvenient and more intrusive.

Therefore, it is an object of the present invention to overcome one or more of the problems described above.

### SUMMARY OF INVENTION

According to a first aspect of the present invention there is provided a contact lens configured to provide an augmented reality experience. The contact lens comprising a first transparent body configured to be positioned on an eyeball; an augmented reality display; and one or more energy generating components, configured to power the augmented reality display. The one or more energy generating components comprising one or more piezoelectric components and one or more photovoltaic cells.

Advantageously, the first aspect of the present invention provides a contact lens which is entirely self-powered and able maintain its own operation by the energy generating components collecting energy from the environment without an external power supply. The piezoelectric components of the energy generating components enable the conversion of mechanical strain into electric current or voltage which can be used to power components of the contact lens, particularly the augmented reality display. The piezoelectric components can collect the mechanical vibrations generated by the large number of movements the eyes naturally perform when interacting with the world. Eye movements utilised by the one or more piezoelectric components to harvest energy include saccades and micro-saccades. These rapid eye movements occur at high frequency, automatically as well as volitionally, and even occur when the eyes are shut during blinking, or when asleep. As these movements occur almost continuously, they can be utilized to power the contact lens in a continuous manner, without the need for bulky and limiting batteries or external power sources.

The photovoltaic cells of the energy generating components enable the conversion of light into electrical current or voltage which may be used by components of the contact lens.

The implementation of the photovoltaic cells with piezoelectric components in a complementary way is advantageous as they can provide more energy to the contact lens overall or compensate for one another in certain scenarios. For example, during daylight, the photovoltaic cells can contribute substantially to the energy output of the combined energy generating components. The piezoelectric components make up a baseline energy output of the combined energy generating components, as they are powered by eye movements that are highly frequent. The piezoelectric components are therefore able to provide this baseline of energy when the eye is closed during blinking or sleeping, when the light exposure reaching the photovoltaic cells is severely diminished. The eye movements which power the piezoelectric components continue when the eye is closed during blinking or sleeping.

The addition of a second type of energy generating component enables more stable and continuous energy harvesting. This is advantageous over current devices, in that the contact lens can be powered in manner that does not interfere with its continuous use or the ability for it to be convenient, minimally intrusive and compact. As a result, the provided contact lens has extended operability which is sufficient for the integrative intent of an augmented reality contact lens, without the need for bulky and limiting batteries or external power sources.

In this way, an augmented reality experience can be provided in a convenient and portable device without the need for frequent charging or bulky batteries.

In the contact lens, the one or more piezoelectric components may be configured to harvest energy from saccades and micro-saccades movement of the eyeball. These rapid eye movements occur at high frequency, automatically as well as volitionally, and even occur when the eyes are shut during blinking, or when asleep. As these movements occur almost continuously, they can be utilized to power the contact lens in a continuous manner, without the need for bulky and limiting batteries or external power sources.

In the contact lens, the one or more energy generating components may be mounted perimetrically on the first transparent body. In this way, the energy generating components provide minimal interruption to the wearer's vision. The perimetrical mounting also provides the optimum position for maximising energy generation from eye movements for the one or more piezoelectric components of the one or more energy generating components.

In the contact lens, the lens may further comprise one or more batteries configured to: store energy generated by the one or more energy generating components; and power the augmented reality display. In this way the energy generated by the one or more energy generating components can be stored by the batteries until needed by the augmented reality display, or other components of the contact lens which require energy to operate. As a result, the contact lens can be powered in a more stable manner, with constant energy provided by the one or more batteries, which are continually 'topped-up' by the one or more energy generating components.

In the contact lens, the one or more batteries may be further configured to be charged by an external power source. In this way the batteries may be charged from an external power source when the contact lens is not worn and charged by the one or more energy generating components when worn to keep the batteries 'topped-up'. As a result, the continuous use time for the contact lens may be extended when compared to a single charge of the one or more batteries.

In the contact lens, the lens may further comprise a processor configured to manage the one or more energy generating components. In this way, the limited energy generated by the one or more energy generating components can be used in the optimal manner in order to maximise operability of the contact lens with the energy available.

In the contact lens, the processor may be configured to manage the one or more energy generating components based on data from monitoring one or more of: the amount of energy generated by the one or more energy generating components; the amount of energy used to power the augmented reality display; and a charge level of the one or more batteries. In this way, the limited energy generated by the one or more energy generating components can be managed and use in the optimal manner based on actual usage data in order to maximise operability of the contact lens with the energy available.

In the contact lens, the processor may be further configured to increase energy generation from the one or more piezoelectric components when the energy generation from the one or more photovoltaic cells falls below a first threshold; or increase energy generation from the one or more photovoltaic cells when the energy generation from the one or more piezoelectric components falls below a second threshold. In this way, energy generation can be switched between the different types of energy generating components depending on which is the most efficient in each specific scenario. The split of energy harvesting between the different types of energy generating components can be adjusted to be most efficient and generate the most energy possible. For example, if the energy generated by the one or more photovoltaic cells falls below a threshold amount, energy generation by the one or more piezoelectric components is increased to counteract this reduction.

In the contact lens, the lens may further comprise a light sensor configured to monitor the light level, wherein the processor may be further configured to increase energy generation from the one or more piezoelectric components when the light level falls below a third threshold. In this way, energy generation can be switched between the different types of energy generating components depending on the light level available to the contact lens. The split of energy harvesting between the different types of energy generating components can be adjusted to be most efficient and generate the most energy possible depending on the light level available to the contact lens. For example, if the light level falls below a threshold amount, the energy generated by the one or more photovoltaic cells becomes minimal, so energy generation by the one or more piezoelectric components is increased to counteract this reduction.

In the contact lens, the lens may further comprise a memory configured to store data monitored by the processor. In this way, by storing one or more of the amount of energy generated by the one or more energy generating components, the amount of energy used to power the augmented reality display, and a charge level of the one or more batteries, the historical data can be utilised to further optimise the operability of the contact lens with the energy available.

In the contact lens, the lens may further comprise a second transparent body configured to encase the components of the contact lens with the first transparent body. In this way the components of the contact lens can be protected from damage. Particularly, damage due to handling of the contact lens or the eye ' blinking over the contact lens. This further protects the wearer's eye from irritation or injury due to exposed components.

According to another aspect of the present invention, there is provided a method for powering the contact lens the first aspect of the present invention. The method comprising: harvesting, by one or more piezoelectric components, mechanical energy from movement of the contact lens; harvesting, by one or more photovoltaic cells, energy from light; and powering an augmented reality display with the harvested energy. Advantageously, this aspect of the present invention provides a method for powering a contact lens in an entirely self-power manner, such that it is able to maintain its own operation by the piezoelectric components and photovoltaic cells collecting energy from the environment without an external power supply. The piezoelectric components enable the conversion of mechanical strain into electric current or voltage which can be used to power components of the contact lens, particularly the augmented reality display. The piezoelectric components can collect the mechanical vibrations generated by the large number of movements the eyes naturally perform when interacting with the world. Eye movements utilised by the one or more piezoelectric components to harvest energy include saccades and micro-saccades. These rapid eye movements occur at high frequency, automatically as well as volitionally, and even occur when the eyes are shut during blinking, or when asleep. As these movements occur almost continuously, they can be utilized to power the contact lens in a continuous manner.

Harvesting energy by photovoltaic cells as well as with piezoelectric components in a complementary way is advantageous as more energy can be harvested overall or the different methods of harvesting can compensate for one another in certain scenarios. For example, during daylight, the photovoltaic cells can contribute substantially to the energy output of the combined energy generating components. The piezoelectric components make up a baseline energy output of the combined energy generating components, as they are powered by eye movements that are highly frequent. The piezoelectric components are therefore able to provide this baseline of energy when the eye is closed during blinking or sleeping, when the light exposure reaching the photovoltaic cells is severely diminished. The eye movements which power the piezoelectric components continue when the eye is closed during blinking or sleeping.

The addition of a second type of energy harvesting enables more stable and continuous energy harvesting. This is advantageous over current methods in that contact lens can be powered in manner that does not interfere with its continuous use or the ability for it to be convenient, minimally intrusive and compact. As a result, the provided method extends the operability of the contact lens in a manner which is sufficient for the integrative intent of an augmented reality contact lens, without the need for bulky and limiting batteries or external power sources.

In this way, an augmented reality contact lens can be powered in a convenient and portable manner without the need for frequent charging or bulky batteries.

In the method for powering the contact lens, the movement of the contact lens may result from saccades and micro-saccades movement of the eyeball. These rapid eye movements occur at high frequency, automatically as well as volitionally, and even occur when the eyes are shut during blinking, or when asleep. As these movements occur almost continuously, they can be utilized to power the contact lens in a continuous manner, without the need for bulky and limiting batteries or external power sources.

In the method for powering the contact lens, the method may further comprise storing, by one or more batteries, the harvested energy for powering the augmented reality display. In this way the harvested energy can be stored by the batteries until needed by the augmented reality display, or other components of the contact lens which require energy to operate. As a result, the contact lens can be powered in a more stable manner, with constant energy provided by the one or more batteries, which are continually 'topped-up' by the harvesting by the piezoelectric components and/or the photovoltaic cells.

In the method for powering the contact lens, the method may further comprise charging, by an external power source, one or more batteries. In this way the batteries may be charged from an external power source when the contact lens is not worn and charged by harvested energy when worn to keep the batteries 'topped-up'. As a result, the continuous use time for the contact lens may be extended when compared to a single charge of the one or more batteries.

In the method for powering the contact lens, the method may further comprise managing, by a processor, the energy harvesting. In this way, the limited energy harvested by the one or more piezoelectric components and/or the one or more photovoltaic cells can be used in the optimal manner in order to maximise operability of the contact lens with the energy available.

In the method for powering the contact lens, the managing, by a processor, the energy harvesting may be based on data from monitoring one or more of: the amount of energy harvested for powering the augmented reality display; the amount of harvested energy used to power the augmented reality display; and a charge level of the one or more batteries.

In this way, by monitoring how much energy is being harvested, the energy harvested can be used in the optimal manner in order to maximise operability of the contact lens with the energy available.

In this way, by monitoring how much harvested energy is being used by the augmented reality display, the energy harvested can be used in the optimal manner in order to maximise operability of the contact lens with the energy available.

In this way, by monitoring the charge level of the one or more batteries, the energy harvested and stored in the batteries can be used in the optimal manner in order to maximise operability of the contact lens with the energy available.

In this way, the limited energy harvested by the one or more piezoelectric components and/or the one or more photovoltaic cells can be used in the optimal manner in order to maximise operability of the contact lens with the energy available.

In the method for powering the contact lens, the method may further comprise increasing, by the processor, harvesting by the one or more piezoelectric components when the energy harvested from the one or more photovoltaic cells falls below a first threshold; or increasing, by the processor, harvesting by the one or more photovoltaic cells when the energy harvested from the one or more piezoelectric components falls below a second threshold. In this way, energy generation can be switched between the different types of components depending on which is the most efficient for harvesting energy in each specific scenario. The split of energy harvesting between the different types of components can be adjusted to be most efficient and harvest the most energy possible. For example, if the energy harvested by the one or more photovoltaic cells falls below a threshold amount, energy harvested by the one or more piezoelectric components is increased to counteract this reduction.

In the method for powering the contact lens, the method may further comprise monitoring, by a light sensor, the light level; and increasing, by the processor, harvesting by the one or more piezoelectric components when the light level falls below a third threshold. In this way, energy generation can be switched between the different types of components depending on which is the most efficient for harvesting energy depending on the light level available to the contact lens. The split of energy harvesting between the different types of components can be adjusted to be most efficient and harvest the most energy possible. For example, if light level falls below a threshold amount, the energy harvested by the one or more photovoltaic cells becomes minimal, so energy harvested by the one or more piezoelectric components is increased to counteract this reduction.

In the method for powering the contact lens, the method may further comprise storing, by a memory, data monitored by the processor. In this way, by storing the amount of energy harvested for powering the augmented reality display, the amount of harvested energy used to power the augmented reality display, and/or a charge level of the one or more batteries, the historical data can be utilised to further optimise the operability of the contact lens with the energy available.

It will be understood by a skilled person that any apparatus feature described herein may be provided as a method feature, and vice versa. It will also be understood that particular combinations of the various features described and defined in any aspects described herein can be implemented and/or supplies and/or used independently.

Moreover, it will be understood that the present invention is described herein purely by way of example, and modifications of detail can be made within the scope of the invention.

### BRIEF DESCRIPTION OF DRAWINGS

One or more embodiments will now be described, purely by way of example, with reference to the accompanying figures, in which:
Figure 1 shows a schematic diagram illustrating a contact lens configured to provide an augmented reality experience according to an embodiment.
Figure 2 shows a flow diagram setting out a method for powering a contact lens configured to provide an augmented reality experience according to an embodiment.

### DETAILED DESCRIPTION

In the following description and accompanying drawings, corresponding features may preferably be identified using corresponding reference numerals to avoid the need to describe said common features in detail for each and every embodiment.

For clarity and brevity, unless explicitly specified otherwise, terms such as "located", "positioned", "disposed", "mounted", "encased" are merely intended to express relative position of two components, and do not exclude other components from being located between said two components. References and mentions to "energy harvesting" and "energy generation" are intended to indicate that energy is collected, harvested, or captured from one source of energy and converted into another type of energy which may be more easily transferred, stored and utilised by electronic components.

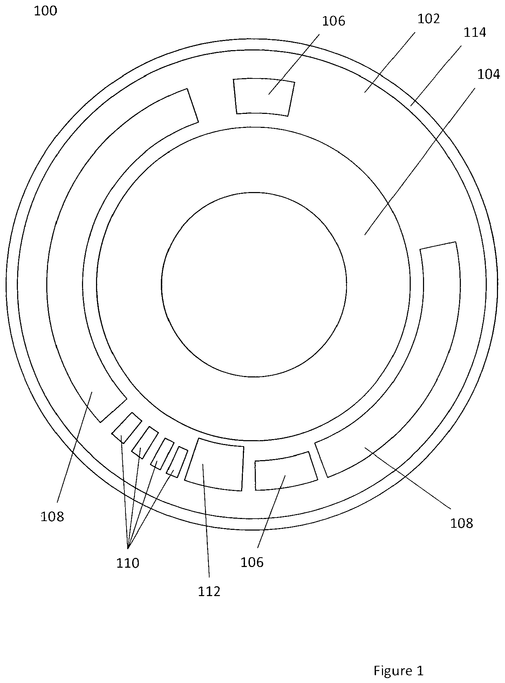

Figure 1 shows a contact lens 100 configured to provide an augmented reality experience according to an embodiment of the present disclosure.

The contact lens 100 includes a first transparent body 102 which is configured to be positioned on an eyeball. The first transparent body 102 may be configured to be positioned on an eyeball of the wearer of the contact lens by conforming to the shape of the wearer's eyeball in the manner of vision-correcting contact lenses. The first transparent body 102 may be circular and may for example have a center thickness of between 0.05 mm and 0.5 mm, between 0.05 mm and 0.1 mm, between 0.05 mm and 0.2 mm, between 0.1 mm and 0.3 mm, or between 0.3 mm and 0.5 mm. The first transparent body 102 may be rigid or flexible and may be gas permeable. The first transparent body 102 may be made from materials commonly used to manufacture vision-correcting contact lenses, such as hydrogel materials and silicone hydrogel materials. The first transparent body 102 may be a functional lens for correcting the wearer's vision. The first transparent body 102 may be tinted or coloured.

The contact lens may also include an augmented reality display 104. The augmented reality display 104 may be transparent display which allows the wearer to see what is shown by the display while still being able to see their environment through the display. The augmented reality display 104 may be an absorptive display, for example a liquid crystal display (LCD), or an emissive display, for example a micro light emitting diode (LED) or organic LED (OLED) display, or a combination of both an absorptive and an emissive display. The augmented reality display 104 may be monochromatic or polychromatic. The augmented reality display 104 may be flexible so it can conform to the shape of the wearer's eyeball.

Since the augmented reality display 104 is positioned very close to the wearer's eyeball during use, the area which it must cover may be much smaller than that of augmented reality displays used in headsets or glasses. Correspondingly, the resolution and pixel density of the display may be high. The pixel density of the augmented reality display 104 may for example be between 1,000 and 20,000 pixels per inch (PPI), between 1,000 and 5,000 PPI, between 5,000 and 10,000 PPI, between 10,000 and 20,000 PPI, between 10,000 and 15,000 PPI, or between 15,000 and 20,000 PPI. The augmented reality display 104 may be disposed on the first transparent body 102 such that the wearer's vision is not interrupted in any way other than the desired display of the augmented reality. The augmented reality display 104 may be ring shaped and may provide an uninterrupted area of the transparent body 102 in the centre of the transparent body 102. This uninterrupted area of the transparent body 102 may ensure that the wearer's vision is not compromised.

The contact lens may also include one or more energy generating components. The one or more energy generating components may be configured to power the augmented reality display 104. The one or more energy generating components may be further configured to power any components of the contact lens which require energy or are necessary for the operation of the contact lens. In this way, the contact lens may be an entirely self-powered device, in that it maintains its own operation by collecting energy from the environment without an external power supply. The one or more energy generating components may be configured to collect energy from the working environment of the contact lens. Energy sources available for the one or more energy generating components to collect energy from may include thermal, solar, kinetic (piezoelectric, triboelectric, electromagnetic) and RF energy. The one or more energy generating components may be disposed on the first transparent body 102 such that the wearer's vision is not interrupted in any way other than the desired display of the augmented reality. The one or more energy generating components may be flexible so that they can conform to the shape of the wearer's eyeball. The one or more energy generating components may be mounted perimetrically on the first transparent body 102 such that they provide minimal interruption to the wearer's vision. The augmented reality display 104 may be powered directly from energy generated by the one or more energy generating components. Alternatively, or additionally, energy from the one or more energy generating components may be stored in one or more batteries.

The one or more energy generating components may include one or more piezoelectric components 106. The one or more piezoelectric components 106 enable the conversion of mechanical strain into electric current or voltage which may be immediately used by components of the contact lens or stored in the one or more batteries 110. The one or more piezoelectric components 106 may include materials with piezoelectric properties for example, ceramics, single crystals, polymers (including polymeric nano/micro-fibres), and/or composites. The one or more piezoelectric components 106 are configured to collect the mechanical vibrations generated by the large number of movements the eyes naturally perform when interacting with the world. The one or more piezoelectric components 106 may be configured to harvest energy from saccades and micro-saccades movement of the eyeballs. Eye movements utilised by the one or more piezoelectric components to harvest energy may include saccades and micro-saccades. These rapid eye movements occur at high frequency, automatically as well as volitionally, and even occur when the eyes are shut during blinking, or when asleep. As these movements occur almost continuously, they can be utilized to power the contact lens in a continuous manner.

The one or more piezoelectric components may be disposed on the first transparent body 102 such that the wearer's vision is not interrupted in any way other than the desired display of the augmented reality. The one or more piezoelectric components may be flexible so that they can conform to the shape of the wearer's eyeball. The one or more piezoelectric components may be mounted perimetrically on the first transparent body 102 such that they provide minimal interruption to the wearer's vision. The perimetrical mounting also provides the optimum position for maximising energy generation from eye movements.

The one or more energy generating components may additionally include one or more photovoltaic cells 108. The one or more photovoltaic cells 108 may be disposed on the first transparent body 102 such that the wearer's vision is not interrupted in any way other than the desired display of the augmented reality. The one or more photovoltaic cells 108 may be flexible so that they can conform to the shape of the wearer's eyeball. The one or more photovoltaic cells 108 enable the conversion of light into electrical current or voltage which may be immediately used by components of the contact lens or stored in the one or more batteries 110. The one or more photovoltaic cells 108 may be sensitive to a wide range of light wavelengths in the visible and near infrared range. The one or more photovoltaic cells 108 may be for example, monocrystalline silicon cells, polycrystalline silicon cells, or thin film cells, including amorphous silicon cells, cadmium telluride cells, or copper indium gallium selenide cells. The one or more photovoltaic cells 108 may be configured to collect energy from light when the eye is open.

As the one or more photovoltaic cells 108 may only be utilized when the eye is open, they may be implemented with one or more piezoelectric components in a complementary way. In this way, the different types of energy generating components may compensate for each other during down-time of another type of energy generating component, and extend the time that the contact lens can be powered.

The contact lens may include one or more batteries 110. The batteries 110 may be configured to store energy generated by the one or more energy generating components. The batteries 110 may be further configured to power the augmented reality display 104. The batteries 110 may be further configured to provide energy any components of the contact lens which require energy or are necessary for the operation of the contact lens. The batteries 110 may be configured to be charged by energy generated by the one or more energy generating components. The batteries 110 may be additionally configured to be charged from an external power source. For example, the batteries may be charged wirelessly by an electromagnetic induction method, a radio wave method, or an electromagnetic field resonance method. In this way, the batteries may be charged from an external power source when not worn and charged by the one or more energy generating components when worn to keep the batteries 'topped-up'. As a result, the continuous use time for the contact lens may be extended when compared to a single charge of the one or more batteries.

The batteries 110 may be for example, micro-batteries, solid-state batteries, Li-ion batteries. The size and thickness of the batteries may be minimized, so that their size is not an irritant to the wearer. The batteries 110 may be disposed on the first transparent body 102 such that the wearer's vision is not interrupted in any way other than the desired display of the augmented reality. The batteries 110 may be mounted perimetrically on the first transparent body 102, so that they provide minimal interruption to the wearer's vision. The batteries 110 may be flexible so that they can conform to the shape of the wearer's eyeball.

The contact lens may also include a camera. The camera may be disposed on the first transparent body 102 such that the wearer's vision is not interrupted in any way other than the desired display of the augmented reality. The camera may be flexible so that it can conform to the shape of the wearer's eyeball. The camera may be a video camera or stills camera. The camera may provide a continuous real-time output to enable visuals to be overlayed on reallife objects by the augmented reality display 104. The output of the camera may be provided to the augmented reality display 104, a processor, and/or a memory of the contact lens.

The contact lens may also include a processor 112. The processor 112 may be disposed on the first transparent body 102 such that the wearer's vision is not interrupted in any way other than the desired display of the augmented reality. The processor may be flexible so that it can conform to the shape of the wearer's eyeball. The processor 112 may be configured to manage the one or more energy generating components. The processor 112 may be configured to manage the energy of the contact lens. The processor 112 may be further configured to optimise the use of limited energy by the contact lens. The processor 112 may be further configured to monitor one or more of the amount of energy generated by the one or more energy generating components, the amount of energy used by the components of the contact lens which require energy, and/or the level of charge of the one or more batteries 110. The processor 112 may be further configured to manage the one or more energy generating components based on data from monitoring one or more of the above parameters.

The processor 112 may be further configured to increase energy generation from the one or more piezoelectric components 106 when the energy generation from the one or more photovoltaic cells 108 falls below a first threshold. The first threshold may be based on or correspond to the minimum energy needed to power the augmented reality display 104 or any components of the contact lens which require energy or are necessary for the operation of the contact lens. Such that, if the energy generated by the one or more photovoltaic cells 108 falls below the minimum energy needed to power the augmented reality display 104 or any components of the contact lens which require energy or are necessary for the operation of the contact lens, energy generated by the one or more piezoelectric components 106 is used to make up the shortfall.

The processor 112 may be further configured to increase energy generation from the one or more photovoltaic cells 108 when the energy generation from the one or more piezoelectric components 106 falls below a second threshold. The second threshold may be based on or correspond to the minimum energy needed to power the augmented reality display 104 or any components of the contact lens which require energy or are necessary for the operation of the contact lens. Such that, if the energy generated by the one or more piezoelectric components 106 falls below the minimum energy needed to power the augmented reality display 104 or any components of the contact lens which require energy or are necessary for the operation of the contact lens, energy generated by the one or more photovoltaic cells 108 is used to make up the shortfall.

The processor may be further configured for AR gaming using the contact lens. The processor may by further configured to process a plurality of inputs and/or a plurality of outputs for an augmented reality gaming session.

The processor 112 may be further configured to reduce the amount of energy used by the components of the contact lens which require energy, when the level of charge of the one or more batteries 110 falls below a threshold. The threshold may be based on or correspond to the minimum energy needed to power the augmented reality display 104 or any components of the contact lens which require energy or are necessary for the operation of the contact lens for a set time period. Such that, if the level of charge of the one or more batteries 100 falls below a minimum amount, the amount of energy being used by the components is reduced so that the energy generating components can recharge the battery to the required threshold. The amount of energy being used by the components of the contact lens can be reduced by, for example, reducing the graphical resolution of the augmented reality display 104, reducing the complexity of the images displayed on the augmented reality display 104, or simplifying a RGBA output of the augmented reality display 104 to a monochrome output.

The processor 112 may be further configured to ignore one or more channels of input received by the contact lens, when the level of charge of the one or more batteries 110 falls below a threshold. The threshold may be based on or correspond to the minimum energy needed to power the augmented reality display 104 or any components of the contact lens which require energy or are necessary for the operation of the contact lens for a set time period. Such that, if the level of charge of the one or more batteries 100 falls below a minimum amount, the processor 112 ignores one or more channels of input received by the contact lens so that the energy generating components can recharge the battery to the required threshold. Ignoring one or more channels of input received by the contact lens may reduce the amount of energy being used by the components of the contact lens which require energy. For example, by ignoring a channel of input, rather than downscaling it. No further processing is required in downscaling resolution to be displayed on the augmented reality display 104, as the input channel is simply ignored. This saves more energy than downscaling. For example, if the contact lens receives a games graphics channel input, a Ul channel input and a streamer webcam channel input, the processor could ignore the Ul and webcam channels at reception to save energy usage.

The processor 112 may be further configured to predict the amount of energy likely to be generated by the one or more energy generating components over a pre-determined future time period, and/or the amount of energy which will be required by the components of the contact lens which require energy over a pre-determined future time period. For example, the processor may predict the amount of energy likely to be generated by the one or more energy generating components based on the user's current use of the contact lens. In another example, the processor may predict the amount of energy which will be used by the augmented reality display during a gaming session, when the gaming session is being played at a certain graphics resolution, refresh rate or complexity.

The processor 112 may be further configured to predict the future level of charge of the one or more batteries 110 over the pre-determined future time period based on the amount of energy likely to be generated by the one or more energy generating components over the pre-determined future time period, and/or the amount of energy which will be required by the components of the contact lens which require energy over the pre-determined future time period.

The processor's predictions may alternatively, or additionally, be based on historical data monitored by the processor 112 and stored in a memory of the contact lens. Data monitored by the processor 112 which may be stored in a memory of the contact lens may include one or more of the amount of energy generated by the one or more energy generating components, the amount of energy used by the components of the contact lens which require energy, and/or the level of charge of the one or more batteries 110.

The processor's predictions may alternatively, or additionally, be based on a determination by the processor 112 that the amount of energy used by the components of the contact lens which require energy will significantly increase over the pre-determined future time period. This determination may be made based on the user's current use of the contact lens. For example, if the user is using the contact lens for as or with a gaming system, the processor 112 may determine that a long graphically intensive session (e.g. a boss fight) is coming up, which is likely to require more energy than the one or more energy generating components are currently generating and/or drain the one or more batteries quickly.

The processor 112 may be further configured to use one or more of the predicted amount of energy likely to be generated by the one or more energy generating components over a pre-determined future time period, the amount of energy which will be required by the components of the contact lens which require energy over a pre-determined future time period, and the future level of charge of the one or more batteries 110 over the pre-determined future time period to determine that the charge level of the one or more batteries should be increased, so that use of the contact lens is not interrupted. For example, a gaming session of the user of the contact lens is not interrupted during an energy intensive portion of the gaming session.

The charge level of the one or more batteries may be increased by pre-harvesting energy to store in the one or more batteries by the one or more energy generating components. Alternatively, or additionally, the charge level of the one or more batteries may be increased by pre-charging the one or more batteries from an external power source.

The contact lens may also include a light sensor. The light sensor may be configured to monitor the light level. The light sensor may be further configured to detect when the eyes are closed when the wearer is blinking or asleep. The light sensor may comprise photodiodes, photoresistors, phototransistors, and/or photovoltaic light sensors. The light sensor may be integrated in the one or more photovoltaic cells 108 such that a separate light sensor is not required. The light level may be monitored by the one or more photovoltaic cells 108 and/or the light sensor.

The processor may be further configured to increase energy generation from the one or more piezoelectric components 106 when the light level falls below a third threshold. The third threshold may be based on or correspond to the amount of light required for the one or more photovoltaic cells 108 to generate the minimum energy needed to power the augmented reality display 104 or any components of the contact lens which require energy or are necessary for the operation of the contact lens. Such that, if the light level falls below a threshold and subsequently the energy generated by the one or more photovoltaic cells 108 falls below the minimum energy needed to power the augmented reality display 104 or any components of the contact lens which require energy or are necessary for the operation of the contact lens, the energy generated by the one or more piezoelectric components 106 is used to make up the shortfall.

The processor may be further configured to determine that, when the light level is below a threshold for a sustained period of time, the wearer is asleep. In response, the processor may implement a 'sleep mode' for the contact lens. In the 'sleep mode', the contact lens may be configured to reduce use of energy and run on minimal energy. In 'sleep mode', the processor may be further configured to increase energy generation from the one or more piezoelectric components 106. The augmented reality display 104 may be configured to turn off, since the wearer is asleep and not viewing it. Any components of the contact lens which require energy or are necessary for the operation of the contact lens may also be configured to turn off or enter a low power mode when the contact lens is in `sleep mode'.

The processor may be further configured to determine that, when the contact lens is in 'sleep mode' and the light level raises above the threshold, the wearer has woken up. In response, the processor may implement 'working mode' for the contact lens. In the 'working mode', the contact lens may be configured to operate as normal and as described in the above and below manner.

The processor 112 may be further configured to decrease energy generation from the one or more piezoelectric components 106 when the energy generation from the one or more photovoltaic cells 108 exceeds a fourth threshold. The fourth threshold may be based on or correspond to the maximum energy needed to power the augmented reality display 104 or any components of the contact lens which require energy or are necessary for the operation of the contact lens. Such that, if the energy generated by the one or more photovoltaic cells 108 exceeds the maximum energy needed to power the augmented reality display 104 or any components of the contact lens which require energy or are necessary for the operation of the contact lens, energy generated by the one or more piezoelectric components 106 is not needed in addition to the energy generated by the one or more photovoltaic cells.

The processor 112 may be further configured to decrease energy generation from the one or more photovoltaic cells 108 when the energy generation from the one or more piezoelectric components 106 exceeds a fifth threshold. The fifth threshold may be based on or correspond to the maximum energy needed to power the augmented reality display 104 or any components of the contact lens which require energy or are necessary for the operation of the contact lens. Such that, if the energy generated by the one or more piezoelectric components 106 exceeds the maximum energy needed to power the augmented reality display 104 or any components of the contact lens which require energy or are necessary for the operation of the contact lens, energy generated by the one or more photovoltaic cells 108 is not needed in addition to the energy generated by the one or more piezoelectric components.

The processor may be further configured to decrease energy generation from the one or more piezoelectric components 106 when the light level exceeds a sixth threshold. The sixth threshold may be based on or correspond to the amount of light required for the one or more photovoltaic cells 108 to generate the maximum energy needed to power the augmented reality display 104 or any components of the contact lens which require energy or are necessary for the operation of the contact lens. Such that, if the light level falls exceeds a threshold and subsequently the energy generated by the one or more photovoltaic cells 108 exceeds a maximum energy needed to power the augmented reality display 104 or any components of the contact lens which require energy or are necessary for the operation of the contact lens, the energy generated by the one or more piezoelectric components 106 is not needed in addition to the energy generated by the one or more photovoltaic cells.

The processor 112 may be further configured to process data recorded by the camera in order to manage visuals for overlay display by the augmented reality display 104. The processor 112 may be a micro-processor. The processor 112 may alternatively or additionally be a plurality of processors, a controller, or a plurality of controllers.

The contact lens may also include a receiver. The receiver may be disposed on the first transparent body 102 such that the wearer's vision is not interrupted in any way other than the desired display of the augmented reality. The receiver may be flexible so that it can conform to the shape of the wearer's eyeball. The receiver may be configured to receive commands from an external transmitting device. The receiver may pass the commands received from an external transmitting device to the augmented reality display 104. The commands may include data and/or visuals for display by the augmented reality display 104. The receiver may be a radio receiver and may include an antenna. The antenna may be circular and positioned around the circumference of the first transparent body 102 to optimise the receiving capabilities of the receiver.

The contact lens may also include a memory to store data. The data stored by the memory may be data monitored by the processor 112. Data monitored by the processor 112 may include one or more of the amount of energy generated by the one or more energy generating components, the amount of energy used by the components of the contact lens which require energy, and/or the level of charge of the one or more batteries 110.

The memory may be disposed on the first transparent body 102 such that the wearer's vision is not interrupted in any way other than the desired display of the augmented reality. The memory may be flexible so that they can conform to the shape of the wearer's eyeball. Data stored in the memory may include for example, settings and user preferences for the augmented reality display 104, data and/or visuals to be displayed by the augmented reality display 104, or historical information regarding data monitored by the processor. The receiver may pass commands received from an external transmitting device to the memory.

The contact lens may also include a second transparent body 114. The second transparent body 114 may be configured to encase the components of the contact lens with the first transparent body 102. The second transparent body 114 may be of similar dimensions to the first transparent body 102, or of slightly larger dimensions to the first transparent body 102 to assist with effective encasing of the components with the first transparent body. The components of the contact lens encased by the first transparent body 102 and the second transparent body 114 may include one or more of an augmented reality display 104, one or more energy generating components, one or more batteries 110, a processor 112, a receiver, a memory. The second transparent body 114 may encase the components of the contact lens with the first transparent body 102 by being positioned on top of the first transparent body 102 and sealing the edges of the first transparent body 102 and the second transparent body 114 together. The two edges may be sealed together with for example, glue, heat treatment, a notch mechanism, or a third transparent body which holds both the first transparent body 102 and the second transparent body 114 together. The encasing of the components within the first 102 and second 114 transparent bodies ensures that the components of the contact lens are sealed within the first and second transparent bodies and cannot be damaged or tampered with. Furthermore, by encasing the components within the bodies, ensures the wearer's eye is protected from irritation or injury due to exposed components. The second transparent body 114 may be rigid or flexible and may be gas permeable. The second transparent body 114 may be made from materials commonly used to manufacture vision-correcting contact lenses, such as hydrogel materials and silicone hydrogel materials. The second transparent body 114 may be a functional lens for correcting the wearer's vision. The second transparent body 114 may be tinted or coloured. Any components of the contact lens described as being disposed or mounted on the first transparent body 102 may alternatively be disposed or mounted on the second transparent body 114.

Components of the contact lens which require energy or are necessary for the operation of the contact lens may include one or more of the augmented reality display 104, one or more energy generating components, the processor 112, and the memory.

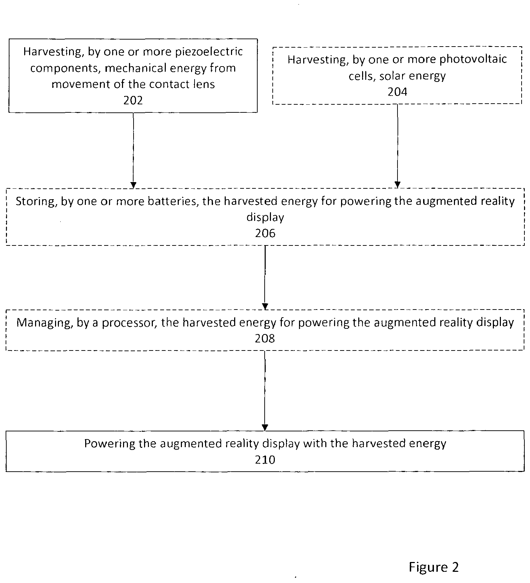

Figure 2 shows a flow diagram setting out a method for powering a contact lens configured to provide an augmented reality experience according to an embodiment of the present disclosure.

At step 202, mechanical energy is harvested from the movement of the contact lens by one or more piezoelectric components of the contact lens. The piezoelectric components enable the conversion of mechanical strain into electric current or voltage which may be immediately used by components of the contact lens or stored in the one or more batteries 110. The movement of the contact lens may be movements the eyes naturally perform when interacting with the world. Eye movements utilised by the one or more piezoelectric components to harvest energy may include saccades and micro-saccades movement of the eyeball. These rapid eye movements occur at high frequency, automatically as well as volitionally, and even occur when the eyes are shut during blinking, or when asleep. As these movements occur almost continuously, they can be utilized to power the contact lens in a continuous manner.

At step 204, energy from light is harvested by one or more photovoltaic cells of the contact lens. The one or more photovoltaic cells enable the conversion of light into electrical current or voltage which may be immediately used by components of the contact lens or stored in the one or more batteries. As energy from light may only be harvested by the photovoltaic cells when the eye is open, the harvesting may be implemented with harvesting one or more piezoelectric components in a complementary way. In this way, the different types of energy harvesting method may compensate for each other during down-time of another type of energy harvesting method, and extend the time that the contact lens can be powered.

Optionally, at step 206, the harvested energy for powering the augmented reality display may be stored by one or more batteries. The batteries store energy harvested by the one or more piezoelectric components and/or the one or more photovoltaic cells. The batteries may power the augmented reality display. The batteries may further provide energy any components of the contact lens which require energy or are necessary for the operation of the contact lens. The batteries may be charged by energy generated by the one or more piezoelectric components and/or the one or more photovoltaic cells. The batteries may additionally be charged from an external power source. For example, the batteries may be charged wirelessly by an electromagnetic induction method, a radio wave method, or an electromagnetic field resonance method. In this way, the batteries may be charged from an external power source when not worn and charged by energy harvested from the one or more piezoelectric components and/or the one or more photovoltaic cells when worn to keep the batteries 'topped-up'. As a result, the continuous use time for the contact lens may be extended when compared to a single charge of the one or more batteries.

Optionally, at step 208, the energy harvesting of steps 202 and/or 204 may be managed by a processor. The processor may further monitor one or more of the amount of energy harvested for powering the augmented reality display, the amount of harvested energy used to power the augmented reality display, and a charge level of the one or more batteries. Step 208 of managing the energy harvesting may be based on data from monitoring one or more of the above parameters. The data monitored by the processor may be stored by a memory.

The processor may increase the harvesting by the one or more piezoelectric components of step 202 when the energy harvested from the one or more photovoltaic cells falls below a first threshold. The first threshold may be based on or correspond to the minimum energy needed to power the augmented reality display 104 or any components of the contact lens which require energy or are necessary for the operation of the contact lens. Such that, if the energy harvested by the one or more photovoltaic cells 108 falls below the minimum energy needed to power the augmented reality display 104 or any components of the contact lens which require energy or are necessary for the operation of the contact lens, energy harvested by the one or more piezoelectric components 106 is used to make up the shortfall.

The processor may increase the harvesting by the one or more photovoltaic cells of step 204 when the energy harvested from the one or more piezoelectric components falls below a second threshold. The second threshold may be based on or correspond to the minimum energy needed to power the augmented reality display 104 or any components of the contact lens which require energy or are necessary for the operation of the contact lens. Such that, if the energy harvested by the one or more piezoelectric components 106 falls below the minimum energy needed to power the augmented reality display 104 or any components of the contact lens which require energy or are necessary for the operation of the contact lens, energy harvested by the one or more photovoltaic cells 108 is used to make up the shortfall.

Optionally, the processor may reduce the amount of energy used by the components of the contact lens which require energy, when the level of charge of the one or more batteries 110 falls below a threshold. The threshold may be based on or correspond to the minimum energy needed to power the augmented reality display 104 or any components of the contact lens which require energy or are necessary for the operation of the contact lens for a set time period. Such that, if the level of charge of the one or more batteries 100 falls below a minimum amount, the processor reduces the amount of energy being used by the components so that the energy generating components recharge the battery to the required threshold. Reducing the amount of energy being used by the components of the contact lens may comprise, for example, reducing the graphical resolution of the augmented reality display 104, reducing the complexity of the images displayed on the augmented reality display 104, or simplifying a RGBA output of the augmented reality display 104 to a monochrome output.

Optionally, the processor 112 may ignore one or more channels of input received by the contact lens, when the level of charge of the one or more batteries 110 falls below a threshold. The threshold may be based on or correspond to the minimum energy needed to power the augmented reality display 104 or any components of the contact lens which require energy or are necessary for the operation of the contact lens for a set time period. Such that, if the level of charge of the one or more batteries 100 falls below a minimum amount, the processor 112 ignores one or more channels of input received by the contact lens so that the energy generating components recharge the battery to the required threshold. Ignoring one or more channels of input received by the contact lens may reduce the amount of energy being used by the components of the contact lens which require energy. For example, by ignoring a channel of input, rather than downscaling it. No further processing is required to be carried out by the processor in downscaling resolution to be displayed on the augmented reality display 104, as the input channel is simply ignored. This saves more energy than downscaling. For example, if the contact lens receives a games graphics channel input, a Ul channel input and a streamer webcam channel input, the processor could ignore the Ul and webcam channels at reception to save energy usage.

Optionally, the processor 112 may predict the amount of energy likely to be generated by the one or more energy generating components over a pre-determined future time period, and/or the amount of energy which will be required by the components of the contact lens which require energy over a pre-determined future time period. For example, the processor may predict the amount of energy likely to be generated by the one or more energy generating components based on the user's current use of the contact lens. In another example, the processor may predict the amount of energy which will be used by the augmented reality display during a gaming session, when the gaming session is being played at a certain graphics resolution, refresh rate or complexity.

Optionally, the processor 112 may predict the future level of charge of the one or more batteries 110 over the pre-determined future time period based on the amount of energy likely to be generated by the one or more energy generating components over the pre-determined future time period, and/or the amount of energy which will be required by the components of the contact lens which require energy over the pre-determined future time period.

The processor's prediction may alternatively, or additionally, be based on historical data monitored by the processor 112 and stored in a memory of the contact lens. Data monitored by the processor 112 may be stored in a memory of the contact lens and may include one or more of the amount of energy generated by the one or more energy generating components, the amount of energy used by the components of the contact lens which require energy, and/or the level of charge of the one or more batteries 110.

The processor's prediction may alternatively, or additionally, be based on a determination by the processor 112 that the amount of energy used by the components of the contact lens which require energy will significantly increase over the pre-determined future time period. This determination by the processor may be made based on the user's current use of the contact lens. For example, if the user is using the contact lens for as or with a gaming system, the processor 112 may determine that a long graphically intensive session (e.g. a boss fight) is coming up, which is likely to require more energy than the one or more energy generating components are currently generating and/or drain the one or more batteries quickly.

Optionally, the processor 112 may use one or more of the predicted amount of energy likely to be generated by the one or more energy generating components over a pre-determined future time period, the amount of energy which will be required by the components of the contact lens which require energy over a pre-determined future time period, and the future level of charge of the one or more batteries 110 over the pre-determined future time period to determine that the charge level of the one or more batteries should be increased, so that use of the contact lens is not interrupted. For example, a gaming session of the user of the contact lens is not interrupted during an energy intensive portion of the gaming session.

Optionally, the charge level of the one or more batteries may be increased by pre-harvesting energy to store in the one or more batteries by the one or more energy generating components. Alternatively, or additionally, the charge level of the one or more batteries may be increased by pre-charging the one or more batteries from an external power source.

Optionally, the method may include monitoring a light level by a light sensor and increasing, by the processor, the harvesting by the one or more piezoelectric components when the light level falls below a third threshold. The light sensor may comprise photodiodes, photoresistors, phototransistors, and/or photovoltaic light sensors for monitoring a light level. The light sensor may be integrated in the one or more photovoltaic cells 108 such that a separate light sensor is not required. The light level may be monitored by the one or more photovoltaic cells 108 and/or the light sensor.

The third threshold may be based on or correspond to the amount of light required for the one or more photovoltaic cells 108 to harvest the minimum energy needed to power the augmented reality display 104 or any components of the contact lens which require energy or are necessary for the operation of the contact lens. Such that, if the light level falls below a threshold and subsequently the energy harvested by the one or more photovoltaic cells 108 falls below the minimum energy needed to power the augmented reality display 104 or any components of the contact lens which require energy or are necessary for the operation of the contact lens, the energy harvested by the one or more piezoelectric components 106 is used to make up the shortfall.

At step 210, the augmented reality display of the contact lens may be powered with the harvested energy. The augmented reality display may be powered directly from the energy harvested by the one or more piezoelectric components and/or the one or more photovoltaic cells. Alternatively, or additionally, the augmented reality display may be powered from the one or more batteries which store energy harvested by the one or more piezoelectric components and/or the one or more photovoltaic cells. Any components of the contact lens which require energy or are necessary for the operation of the contact lens may be powered in the same way as the augmented reality display of the contact lens.

Having described aspects of the disclosure in detail, it will be apparent that modifications and variations are possible without departing from the scope of the aspects of the disclosure as defined in the appended claims. As various changes could be made in the above constructions, products and method without departing from the scope of aspects of the disclosure, it is intended that all matter contained in the above description and shown in the accompanying drawings shall be interpreted as illustrative and not in a limiting sense.

## Claims

1. A contact lens (100) configured to provide an augmented reality experience, comprising:
a first transparent body (102) configured to be positioned on an eyeball;
an augmented reality display (104); and
one or more energy generating components, configured to power the augmented reality display (104), comprising one or more piezoelectric components (106) and one or more photovoltaic cells (108).

2. The contact lens of claim 1, wherein the one or more piezoelectric components (106) are configured to harvest energy from saccades and micro-saccades movement of the eyeball.

3. The contact lens of any preceding claim, wherein the one or more energy generating components are mounted perimetrically on the first transparent body.

4. The contact lens of any preceding claim, further comprising one or more batteries (110) configured to:
store energy generated by the one or more energy generating components; and
power to the augmented reality display (104).

5. The contact lens of claim 4, wherein the one or more batteries (110) are further configured to be charged by an external power source.

6. The contact lens of any preceding claim, further comprising a processor (112) configured to manage the one or more energy generating components.

7. The contact lens of claim 6, wherein the processor (112) is configured to manage the one or more energy generating components based on data from monitoring one or more of:
the amount of energy generated by the one or more energy generating components;
the amount of energy used to power the augmented reality display (104); and
a charge level of the one or more batteries (110).

8. The contact lens of claim 6 or claim 7, wherein the processor (112) is further configured to:
increase energy generation from the one or more piezoelectric components (106) when the energy generation from the one or more photovoltaic cells (108) falls below a first threshold; or
increase energy generation from the one or more photovoltaic cells (108) when the energy generation from the one or more piezoelectric components (106) falls below a second threshold.

9. The contact lens of any of claims 6 to 8, further comprising a light sensor configured to monitor the light level, wherein the processor (112) is further configured to increase energy generation from the one or more piezoelectric components (106) when the light level falls below a third threshold.

10. The contact lens of any of claims 7 to 9, further comprising a memory configured to store data monitored by the processor (112)

11. The contact lens of any preceding claim, further comprising a second transparent body (114) configured to encase the components of the contact lens with the first transparent body (102).

12. A method for powering the contact lens (100) of claims 1 to 11, the method comprising:
harvesting (202), by one or more piezoelectric components (106), mechanical energy from movement of the contact lens (100)
harvesting (204), by one or more photovoltaic cells (108), energy from light; and
powering (210) an augmented reality display (104) with the harvested energy.

13. The method of claim 12, wherein the movement of the contact lens (100) results from saccades and micro-saccades movement of the eyeball.

14. The method of any of claims 12 to 13, further comprising storing (206), by one or more batteries (110), the harvested energy for powering the augmented reality display (104).

15. The method of claim 14, further comprising charging, by an external power source, the one or more batteries (110).

16. The method of any of claims 12 to 15, further comprising managing (208), by a processor (112), the energy harvesting (202, 204).

17. The method of claim 16, wherein managing, by a processor (112), the energy harvesting (202, 204) is based on data from monitoring one or more of:
the amount of energy harvested for powering the augmented reality display (104);
the amount of harvested energy used to power the augmented reality display (104); and
a charge level of the one or more batteries (110).

18. The method of claim 16 or claim 17, further comprising:
increasing, by the processor (112), harvesting (202) by the one or more piezoelectric components (106) when the energy harvested from the one or more photovoltaic cells falls below a first threshold; or
increasing, by the processor (112), harvesting (204) by the one or more photovoltaic cells (108) when the energy harvested from the one or more piezoelectric components falls below a second threshold.

19. The method of any of claims 16 to 18, further comprising:
monitoring, by a light sensor, a light level; and
increasing, by the processor (112), harvesting (202) by the one or more piezoelectric components (106) when the light level falls below a third threshold.

20. The method of any of claims 17 to 19, further comprising storing, by a memory, data monitored by the processor (112).
